# EUROPEAN PATENT APPLICATION

(11) **EP 4 800 293 A1**
(43) Date of publication of application: **02.09.2026**
(21) Application number: 26159539.1
(22) Date of filing: 19.02.2026
(51) Int. Cl.: F21V 8/00, G02B 6/00

(54) **DISPLAY DEVICE**

(30) Priority: 26.02.2025 JP 2025029107
(71) Applicant: Alps Alpine Co., Ltd., Ota-ku, Tokyo 145-8501 (JP)
(72) Inventor: Saeki, Takuya, Iwaki-city, Fukushima (JP)
(74) Representative: Schmitt-Nilson Schraud Waibel Wohlfrom Patentanwälte Partnerschaft mbB

(57) **Abstract**

A display device includes: a translucent light-guiding substrate including a first main surface, an end surface intersecting the first main surface, and a second main surface located on an opposite side of the first main surface; a light source including a light emitting surface and arranged to face at least one of the second main surface or the end surface; and a reflective layer arranged on the first main surface in a region overlapping with the light source in a top view. The translucent light-guiding substrate includes a light diffusion and scattering portion. A pattern corresponding to the light diffusion and scattering portion is displayed in the top view.

## Description

The present application is based on and claims priority to Japanese Patent Application No. 2025-029107 filed on February 26, 2025.

The present disclosure relates to a display device.

Conventionally, a display device for displaying a pattern of characters or the like by using a translucent light-guiding substrate has been known. For example, JP 2005-258077 A discloses a device including a light guide and a light diffusing reflection portion. The light diffusion reflection portion is formed on the rear surface of the light guide and has the same shape as the pattern of a design or the like to be displayed by the device.

The present disclosure relates to a display device according to the appended claims. Embodiments are disclosed in the dependent claims.

A display device according to an embodiment of the present disclosure includes: a translucent light-guiding substrate including a first main surface, an end surface intersecting the first main surface, and a second main surface located on an opposite side of the first main surface; a light source including a light emitting surface and arranged to face at least one of the second main surface or the end surface; and a reflective layer arranged on the first main surface in a region overlapping with the light source in a top view, wherein the translucent light-guiding substrate includes a light diffusion and scattering portion and displays a pattern corresponding to a light diffusion and scattering portion in a top view.

### BRIEF DESCRIPTION OF THE DRAWINGS

FIG. 1 is a schematic top view illustrating an overall configuration of a display device according to a first embodiment;
FIG. 2 is a schematic cross-sectional view taken along a line II-II in FIG. 1;
FIG. 3 is a schematic cross-sectional view illustrating a periphery of a light source of a display device according to a comparative example;
FIG. 4A is a schematic top view of a first example of a pattern displayed by the display device according to the first embodiment;
FIG. 4B is a view of a superimposition of a pattern according to the first example of FIG. 4A and a display pattern by a liquid crystal panel located behind the display device according to the first embodiment;
FIG. 5 is a view of a second example of the pattern displayed by the display device according to the first embodiment;
FIG. 6 is a schematic cross-sectional view illustrating a periphery of a light source of a display device according to a second embodiment;
FIG. 7 is a schematic top view illustrating the overall configuration of a display device according to a third embodiment;
FIG. 8 is a schematic cross-sectional view illustrating the overall configuration of a display device according to a fourth embodiment;
FIG. 9 is a schematic cross-sectional view illustrating a periphery of a protrusion forming layer of the display device according to the fourth embodiment;
FIG. 10A is a view of a first example of a pattern displayed by the display device according to the fourth embodiment;
FIG. 10B is a view of a second example of the pattern displayed by the display device according to the fourth embodiment;
FIG. 10C is a view of a third example of the pattern displayed by the display device according to the fourth embodiment; and
FIG. 11 is a view of an example of how an object behind the display device is visible according to the fourth embodiment.

However, in the device described in JP 2005-258077 A, light is made incident on the inside of a translucent light-guiding substrate through the end surface from a light source arranged to face the end surface of the translucent light-guiding substrate such as a light guide. Therefore, in order to efficiently make light from the light source incident on the inside of the translucent light-guiding substrate to increase the light utilization efficiency of a display device, the end surface of the translucent light-guiding substrate is required to have a length equal to or longer than a light emitting surface of the light source in a thickness direction. When the end surface of the translucent light-guiding substrate is long in the thickness direction, the translucent light-guiding substrate becomes thick, and the display device may be enlarged.

The objective of the present disclosure is to provide a display device which has high light utilization efficiency and can be miniaturized.

Embodiments of the present disclosure will be described in the following with reference to the accompanying drawings. However, the following embodiments are illustrative of embodiments for achieving the technical concept of the present disclosure, and are not limited to the following. Since each of the drawings schematically illustrates embodiments of the present disclosure, the scale, spacing, positional relationship, or the like of each member may be exaggerated, or a part of the member may be omitted. Furthermore, an end view showing only a cut surface may be used as a cross-sectional view.

In the following description, components having substantially the same function are denoted by common reference numerals, and description thereof is omitted as appropriate. In addition, terms indicating a specific direction or position, for example, "up", "down", and other terms including these terms, may be used. However, these terms are used only for ease of understanding of the relative direction or position in the referenced drawings. As long as the relative direction or position in terms of "up", "down", or the like in the referenced drawings is the same, drawings other than in the present disclosure, the actual product or the like need not necessarily have the same arrangement as in the referenced drawings.

In the present specification, the positional relationship expressed as "up" includes a case where members are in contact with each other and a case where one member is located above another member but not in contact with each other. The positional relationship expressed as "down" includes a case where members are in contact with each other and a case where one member is located below another member but not in contact with each other. The term "to be arranged" is not limited to a case where members are in direct contact with each other but also includes a case where one member is arranged indirectly, for example, through another member.

In each drawing, orthogonal coordinates having an X-axis, a Y-axis, and a Z-axis are used as directional expressions. The X-axis, Y-axis, and Z-axis are orthogonal to each other. In an X-direction, the direction toward which an arrow is directed is denoted as a +X-side, and the direction opposite to the +X-side is denoted as a -X-side. In a Y-direction, the direction toward which an arrow is directed is denoted as a +Y-side, and the direction opposite to the +Y-side is denoted as a -Y-side. In a Z-direction, the direction toward which an arrow is directed is denoted as a +Z-side, and the direction opposite to the +Z-side is denoted as a -Z-side. In the present specification, as an example, the +Z-side corresponds to "up", and the -Z-side corresponds to "down". In addition, as an example, the direction that is normal to a first main surface of the translucent light-guiding substrate in the display device according to the embodiment corresponds to the Z-direction. In the present specification, the thickness direction of the translucent light-guiding substrate in the display device according to the embodiment is sometimes referred to as the Z-direction.

### [First embodiment]

### <Configuration of display device according to first embodiment>

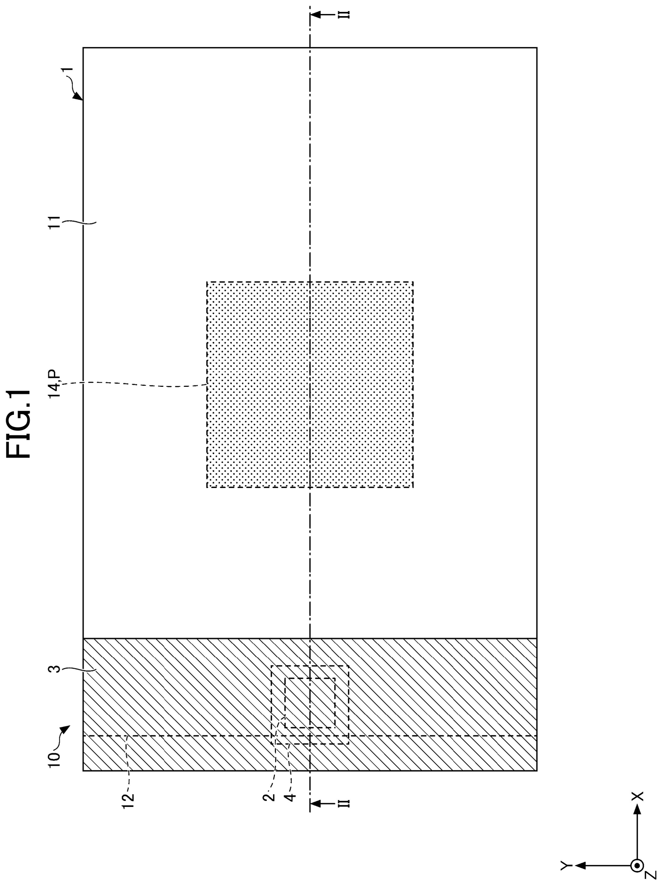

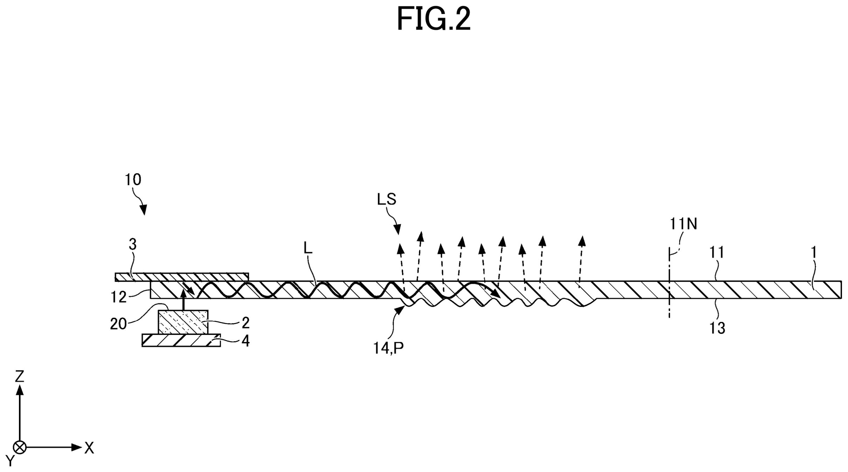

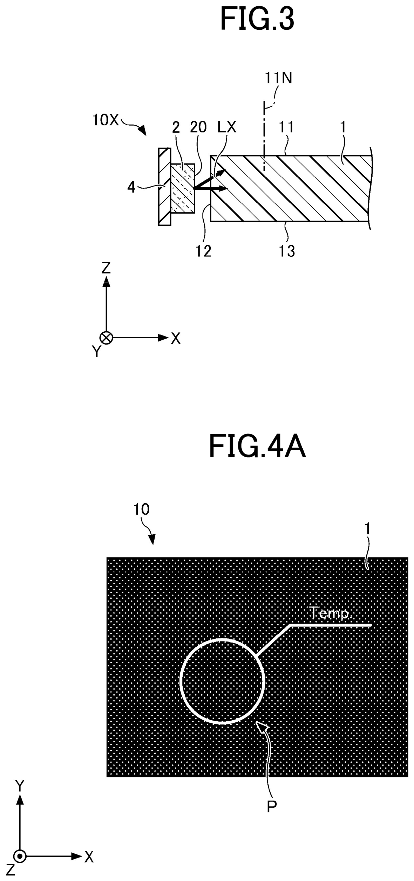

A configuration of a display device according to a first embodiment of the present disclosure will be described with reference to FIGS. 1 to 3. FIG. 1 is a schematic top view illustrating an overall configuration of a display device 10 according to the first embodiment. FIG. 2 is a schematic cross-sectional view taken along a line II-II in FIG. 1. FIG. 3 is a schematic cross-sectional view illustrating a periphery of a light source 2 of a display device 10X according to a comparative example.

As illustrated in FIGS. 1 and 2, the display device 10 includes a translucent light-guiding substrate 1, the light source 2, and a reflective layer 3. The translucent light-guiding substrate 1 includes a first main surface 11, an end surface 12 intersecting the first main surface 11, and a second main surface 13 positioned on the opposite side of the first main surface 11. Furthermore, the translucent light-guiding substrate 1 includes a light diffusion and scattering portion 14. The light source 2 includes a light emitting surface 20. The light source 2 is arranged to face at least one of the second main surface 13 or the end surface 12. The reflective layer 3 is disposed on the first main surface 11 at a position overlapping with the light source 2 in a top view.

In the examples illustrated in FIGS. 1 and 2, the display device 10 further includes a wiring board 4 on which the light source 2 is mounted. The light source 2 is disposed so as to face the second main surface 13 and not to face the end surface 12. The reflective layer 3 is disposed so as to face the light source 2 disposed near the end surface 12 on the -X-side of the translucent light-guiding substrate 1, through the translucent light-guiding substrate 1.

In the example as illustrated in FIG. 2, the light L emitted from the light source 2 enters into the translucent light-guiding substrate 1 through a portion of the second main surface 13 facing the light source 2. At least a part of the light L incident on the translucent light-guiding substrate 1 is reflected by the reflective layer 3 and guided toward the +X-side inside the translucent light-guiding substrate 1 while repeating total reflection on the first main surface 11 and the second main surface 13. When the light L guided inside the translucent light-guiding substrate 1 reaches the light diffusion and scattering portion 14 provided in the translucent light-guiding substrate 1, a part of the light L is diffused or scattered by the light diffusion and scattering portion 14. In the example as illustrated in FIG. 2, the light diffusion and scattering portion 14 is provided on the second main surface 13 of the translucent light-guiding substrate 1. The light diffusion and scattering portion 14 includes a plurality of protrusions having light diffusion or light scattering properties.

The light L diffused or scattered by the light diffusion and scattering portion 14 is extracted from the first main surface 11 of the translucent light-guiding substrate 1 to the +Z-side as diffused and scattered light LS. In FIG. 2, a part of the light L emitted from the light source 2 and guided inside the translucent light-guiding substrate 1 is indicated by solid arrows. The diffused and scattered light LS extracted from the translucent light-guiding substrate 1 is indicated by broken arrows.

The light diffusion and scattering portion 14 is provided at a position or region corresponding to a pattern P in the translucent light-guiding substrate 1 in the top view. In the example as illustrated in FIG. 1, the pattern P is a pattern having a rectangular outer edge shape in the top view. The light diffusion and scattering portion 14 is provided in a region having a rectangular outer edge shape corresponding to the pattern P in the top view. In FIG. 1, for the sake of clarity, the rectangular region in which the light diffusion and scattering portion 14 is provided in the translucent light-guiding substrate 1 is indicated by a dot-hatching pattern, and the reflective layer 3 is indicated by a diagonal-hatching pattern. Furthermore, in order to indicate that the pattern P is a pattern corresponding to the light diffusion and scattering portion 14, the reference numeral of the light diffusion and scattering portion 14 and the reference numeral of the pattern P are indicated together. In the following drawings, the reference numerals may be indicated together for the same purpose.

The display device 10 displays the pattern P corresponding to the light diffusion and scattering portion 14 provided on the translucent light-guiding substrate 1 in a top view by emitting light from the light source 2. In a top view, the pattern P appears to be illuminated by the diffused and scattered light LS extracted from the translucent light-guiding substrate 1 by the light diffusion and scattering portion 14. In the example as illustrated in FIG. 1, the display device 10 displays the pattern P having a rectangular outer edge shape in a top view by emitting light from the light source 2. However, the pattern P can be appropriately changed according to the contents desired to be displayed by the display device 10. The display device 10 can display the pattern P including characters, symbols, graphics, images, or combinations thereof.

To an observer, the -Z-side of the translucent light-guiding substrate 1 is visible in a top view. When the light source 2 does not emit light, the display device 10 does not display the pattern P, and the viewer can see through the -Z-side of the entire translucent light-guiding substrate 1 in the top view. When the light source 2 emits light, the -Z-side of the translucent light-guiding substrate 1 in the region other than the region where the pattern P is displayed is visible in the display device 10. However, when the light source 2 emits light, the viewer may see through the -Z-side of the translucent light-guiding substrate 1 in the top view in the region where the pattern P is displayed, while the pattern P is seen to emit light.

Here, FIG. 3 illustrates the periphery of the light source 2 in the display device 10X according to a comparative example. In FIG. 3, in order to make the description easier to understand, among the components of the display device 10X, components having functions equivalent to those of the display device 10 according to the first embodiment are designated by common reference numerals for convenience.

As illustrated in FIG. 3, in the display device 10X according to the comparative example, the light source 2 is arranged such that the light emitting surface 20 faces the end surface 12 of the translucent light-guiding substrate 1. Light LX emitted from the light source 2 enters into the translucent light-guiding substrate 1 through the end surface 12 and is guided inside the translucent light-guiding substrate 1.

When the length of the light emitting surface 20 of the light source 2 is longer than the length of the end surface 12 in the Z-direction corresponding to a direction normal to the first main surface 11N of the first main surface 11, light of the light LX from the light source 2 emitted from a region of the light emitting surface 20 not facing the end surface 12 cannot enter the inside of the translucent light-guiding substrate 1, resulting in light loss. As a result, light that does not contribute to display by the display device 10X is generated, and the light utilization efficiency of the display device 10X may be lowered. Furthermore, in order to increase the light utilization efficiency of the display device 10X, when the length of the end surface 12 in the Z-direction is equal to or greater than the length of the light emitting surface 20 of the light source 2, the translucent light-guiding substrate 1 becomes thick because the end surface 12 is longer in the Z-direction. As a result, the display device 10X may be enlarged.

The display device 10 according to the first embodiment of the present disclosure includes the light source 2 arranged to face the second main surface 13, and the reflective layer 3 arranged on the first main surface 11 at a position overlapping with the light source 2 in a top view. By arranging the light source 2 to face the second main surface 13, the size of the end surface 12 in the Z-direction does not need to be equal to or greater than the size of the light emitting surface 20 of the light source 2. As a result, since the end surface 12 can be made shorter than the light emitting surface 20 in the Z-direction, the translucent light-guiding substrate 1 can be made thin, and the display device 10 can be readily made thin. In other words, the display device 10 can be readily made small in the Z-direction. By arranging the reflective layer 3 on the first main surface 11 at a position overlapping with the light source 2 in a top view, the light L emitted from the light source 2 and transmitted through the translucent light-guiding substrate 1 in a +Z-direction can be reflected by the reflective layer 3 and guided into the translucent light-guiding substrate 1. As a result, the light L from the light source 2 is prevented from passing through the translucent light-guiding substrate 1, and the light loss can be reduced, thereby increasing the light utilization efficiency of the display device 10. As described above, according to the first embodiment of the present disclosure, it is possible to provide the display device 10 that has high light utilization efficiency and can be miniaturized.

For example, when the display device 10 is mounted on a vehicle, when the display device 10 is large, the type of vehicle on which the display device 10 is mounted may be limited to a large vehicle or the like. According to the first embodiment, by miniaturizing the display device 10, the display device 10 can be mounted on various types of vehicles from a small vehicle to a large vehicle, and a range of types of vehicles on which the display device 10 can be mounted can be expanded.

In the display device 10, the -Z-side of the translucent light-guiding substrate 1 is visible in a top view. As a result, the pattern P displayed by the display device 10 can be superimposed and displayed on a design or member arranged on the -Z-side of the translucent light-guiding substrate 1, or the pattern P can be displayed in a state in which the -Z-side of the translucent light-guiding substrate 1 is visible to an observer. By superimposing and displaying the pattern P on a design or member arranged on the -Z-side of the translucent light-guiding substrate 1, the pattern P can be displayed without impairing the designability of the design or member. In addition, a see-through type display device 10 can be achieved, and the designability of the display device 10 can be enhanced.

In the display device 10, the pattern P can be displayed by emitting light from the light source 2 when necessary, and the pattern P can be hidden by not emitting light from the light source 2 when not necessary. For example, the pattern P indicating the position of the operation button can be displayed only when the operation of the operation button is necessary, and not displayed when the operation is not necessary. Thus, for example, it is possible to reduce operator stress due to constant display of the operation button.

Hereinafter, embodiments of each component of the display device 10 will be described in detail.

### (Translucent light-guiding substrate 1)

Glass, resin, or the like may be used as the material of the translucent light-guiding substrate 1. An acrylic resin or the like may be used as the resin. The translucent light-guiding substrate 1 preferably has a transmittance to visible light of 60% or more, for example. The thickness of the translucent light-guiding substrate 1 may be about 0.3 mm, for example. The translucent light-guiding substrate 1 preferably has flexibility. The flexibility of the translucent light-guiding substrate 1 makes it possible to arrange the display device 10 along the shape of a member having not only a planar shape but also a curved shape or other various shapes.

The light diffusion and scattering portion 14 is not limited to the second main surface 13 of the translucent light-guiding substrate 1, but may be provided on at least one of the first main surface 11 or the second main surface 13 of the translucent light-guiding substrate 1. The light diffusion and scattering portion 14, as long as it has light diffusion or light scattering properties, is not limited to a plurality of protrusions, and may include a plurality of recessed portions, or a combination of a plurality of recessed portions and a plurality of protrusions. The light diffusion and scattering portion 14 is not limited to the shape of the plurality of protrusions or the like provided on at least one of the first main surface 11 or the second main surface 13, but may include a plurality of particles or a plurality of voids or the like having light diffusion or light scattering properties provided inside the translucent light-guiding substrate 1. The light diffusion and scattering portion 14 may be a combination of the plurality of protrusions or the like and the plurality of particles or a plurality of voids or the like.

As a method for forming the light diffusion and scattering portion 14 on the translucent light-guiding substrate 1, when the light diffusion and scattering portion 14 has a shape such as the plurality of protrusions, a method for printing a plurality of patterns such as dots, a laser processing method, a cutting method, an embossing method, a forming method, a pressing method, a blasting method, or the like can be used. When the light diffusion and scattering portion 14 includes a plurality of particles, a molding process of a resin containing a plurality of particles or the like may be used. When the light diffusion and scattering portion 14 includes a plurality of voids, a molding process of a resin containing a plurality of bubbles or the like may be used.

### (Light source 2)

A light source 2 including a light emitting element such as a light emitting diode (LED) may be used. However, not limited to an LED, a laser diode (LD), an organic electroluminescence (organic EL), or the like may be used as the light source 2. The number of light sources 2 is not limited to one. For example, a plurality of light sources 2 may be arranged side by side in the Y-direction in which the end surface 12 of the translucent light-guiding substrate 1 extends.

### (Reflective layer 3)

As the reflective layer 3, a metal film, a metal member, a dielectric film, a dielectric member, or the like having a high reflectivity with respect to light emitted from the light source 2 can be used. Examples of metals having a high reflectivity with respect to light emitted from the light source 2 include aluminum or the like. The metal film may be a metal multilayer film in which a plurality of kinds of metal films are laminated. The dielectric film may be a dielectric multilayer film in which a plurality of kinds of dielectric films are laminated.

For example, the reflective layer 3 may be disposed on the first main surface 11 of the translucent light-guiding substrate 1 at a position overlapping with the light source 2 in a top view by forming a metal film or a dielectric film by a vapor deposition method or the like. Alternatively, a member to be the reflective layer 3 formed by coating a base material such as glass or resin with a metal film or a dielectric film may be disposed on the first main surface 11 of the translucent light-guiding substrate 1 at a position overlapping with the light source 2 in a top view.

### (Wiring board 4)

The wiring board 4 is preferably made of an insulating material as a base material, and is preferably made of a material having a certain strength. Furthermore, the wiring board 4 is preferably made of a material not appreciably permeable to light emitted from the light source 2, external light or the like. Specifically, the wiring board 4 can be made of a resin such as a phenol resin, an epoxy resin, a polyimide resin, a BT resin, polyphthalamide, a polyester resin or the like as a base material.

### <Example of display by display device 10>

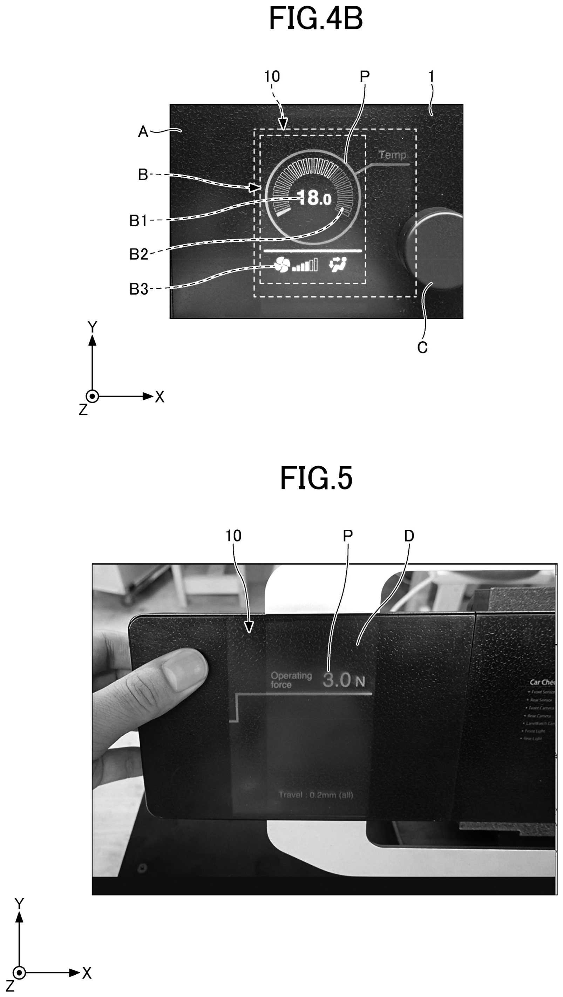

The display device 10 is disposed on a surface of a material which cannot emit light, for example, and can display characters, numerals, symbols, graphics, images, or combinations thereof on the surface of the material. An example of a display by the display device 10 will be described with reference to FIGS. 4A, 4B, and 5.

### (First example)

FIG. 4A is a schematic top view illustrating a first example of the pattern P displayed by the display device 10. FIG. 4B is a diagram illustrating a state in which the pattern P of the first example as illustrated in FIG. 4A and a display pattern by a liquid crystal panel positioned behind the display device 10 are superimposed.

In the first example as illustrated in FIGS. 4A and 4B, the pattern P indicating a temperature display region is superimposed on a liquid crystal panel for temperature display provided in an instrument panel of a vehicle. As illustrated in FIG. 4A, the pattern P includes a circle indicating a temperature display region and a character string "Temp." indicating that the region indicated by the circle is a temperature display region.

In the example as illustrated in FIG. 4B, an instrument panel A is provided with a liquid crystal panel B and a dial C for temperature adjustment. The liquid crystal panel B includes a numeral B1 indicating a current set temperature, an annular figure B2 indicating a high or low of the temperature, and an icon B3 indicating a wind direction and an air volume by a fan. In the example as illustrated in FIG. 4B, the display device 10 is superimposed on the liquid crystal panel B, and the pattern P indicates a region where the set temperature is displayed. For example, by superimposing the display device 10 on the liquid crystal panel B, the pattern P including characters, numerals, graphics, and the like can be displayed in a range exceeding the area of the liquid crystal panel.

### (Second example)

FIG. 5 is a view of a second example of the pattern P displayed by the display device 10. In the second example as illustrated in FIG. 5, the display device 10 is arranged on the surface of an aluminum plate D, and the pattern P including characters, numerals, and lines is displayed on a surface of the aluminum plate D. The surface of the aluminum plate D arranged behind the display device 10 is visible through the display device 10.

As illustrated in FIG. 5, by arranging the display device 10 on the surface of the aluminum plate D, the pattern P can be displayed on the surface of the aluminum plate D, which is a material that cannot emit light. In addition, by superimposing the pattern P on the design or member arranged on the -Z-side of the translucent light-guiding substrate 1, the pattern P can be displayed while maintaining the design of the member arranged behind the translucent light-guiding substrate 1.

### [Second embodiment]

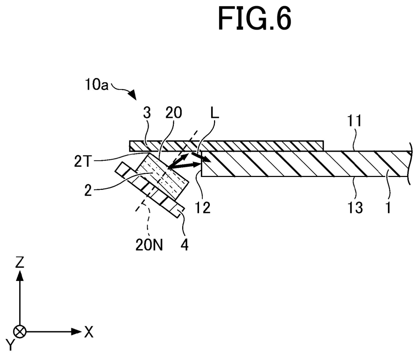

Next, a display device according to a second embodiment of the present disclosure will be described with reference to FIG. 6. It should be noted that the same names and reference numerals as those of the above-described embodiments indicate the same or similar members or configurations, and the detailed description thereof will be omitted accordingly. The same applies in the following embodiments.

FIG. 6 is a schematic cross-sectional view illustrating the periphery of the light source 2 of a display device 10a according to the second embodiment. FIG. 6 is a cross-sectional view illustrating the periphery of the light source 2 of the display device 10a, taken along a line II-II in FIG. 1.

The display device 10a according to the second embodiment differs from the display device 10 according to the first embodiment in that the light source 2 is arranged to face each of the second main surface 13 and the end surface 12.

The light source 2 can be positioned below the first main surface 11, for example, on the -Z-side. In the example as illustrated in FIG. 6, an upper end 2T of the light source 2 is positioned slightly on the -Z-side of the first main surface 11 in the Z-direction. Since the upper end 2T is located below the first main surface 11, the light source 2 is located below the first main surface 11. Since the light source 2 is located below the first main surface 11, the display device 10a can be made thinner and the display device 10a can be made smaller in the Z-direction.

In the example as illustrated in FIG. 6, the light source 2 is arranged to face each of the end surface 12 and the reflective layer 3 without overlapping with the translucent light-guiding substrate 1 in a top view. Moreover, the normal 20N to the light emitting surface 20 is inclined to approach the end surface 12. In the present specification, "facing" includes not only a state in which the surfaces of two objects face each other in parallel, but also a state in which parts of the two objects face each other in a state in which the surfaces of the two objects are inclined.

Since the light source 2 is arranged to face each of the end surface 12 and the reflective layer 3 without overlapping with the translucent light-guiding substrate 1 in a top view, the light L emitted from the light emitting surface 20 readily enters into the translucent light-guiding substrate 1 through the end surface 12 as compared with a case in which the normal 20N is parallel to the end surface 12. Moreover, the light L emitted from the light emitting surface 20 and reflected by the reflective layer 3 readily enters into the translucent light-guiding substrate 1 through the end surface 12. Since the light L emitted from the light emitting surface 20 readily enters into the translucent light-guiding substrate 1, the light utilization efficiency of the display device 10a can be increased. Furthermore, it is possible to increase the light utilization efficiency of the display device 10a while further reducing the size of the display device 10a in the Z-direction.

Since the effects of the display device 10a other than those described above are the same as those of the display device 10 described in the first embodiment, redundant descriptions thereof will be omitted.

### [Third embodiment]

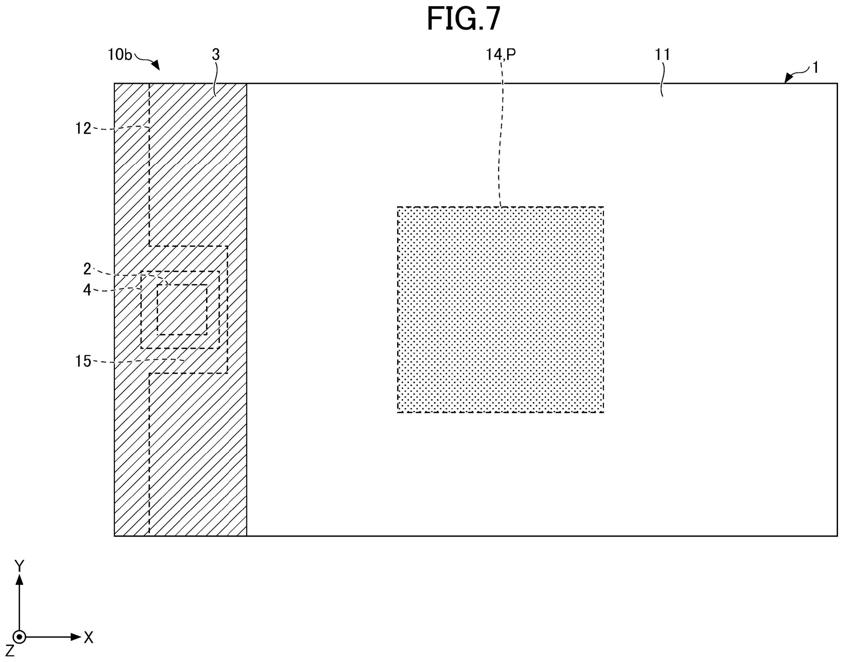

Next, a display device according to a third embodiment of the present disclosure will be described with reference to FIG. 7. FIG. 7 is a schematic top view illustrating the overall configuration of a display device 10b according to the third embodiment.

The display device 10b according to the third embodiment of the present disclosure includes one or more light sources 2 arranged in the Y-direction in which the end surface 12 extends, and the translucent light-guiding substrate 1 includes one or more cutouts 15 arranged in the Y-direction in which the end surface 12 extends. The one or more light sources 2 correspondingly overlap with the one or more cutouts 15 in a top view. This point is different from the display device 10 according to the first embodiment of the present disclosure.

In the example as illustrated in FIG. 7, the display device 10b includes one light source 2. The translucent light-guiding substrate 1 includes one cutout 15. One light source 2 overlaps with one cutout 15 in a top view. However, the display device 10b may include a plurality of light sources 2 and a plurality of cutouts 15, and the plurality of light sources 2 and the plurality of cutouts 15 may overlap one another in a top view.

In the example as illustrated in FIG. 7, the cutout 15 is a recessed portion which is recessed on the +X-side from the end surface 12 in a top view. The cutout 15 has a rectangular shape in a top view. However, the cutout 15 may have a hemispherical shape or the like which is recessed on the +X-side from the end surface 12 in a top view.

In the third embodiment of the present disclosure, the one or more light sources 2 arranged in the Y-direction in which the end surface 12 extends overlap with the one or more cutouts 15 arranged in the Y-direction in which the end surface 12 extends in the top view, such that the length of the translucent light-guiding substrate 1 can be shortened in the X-direction that is orthogonal to the Y-direction and the display device 10b can be downsized in the X-direction. In addition, the display device 10b can be thinned in the Z-direction, and the reflective layer 3 can be held in the portion of the translucent light-guiding substrate 1 excluding the cutouts 15.

Since the effects of the display device 10b other than those described above are the same as those of the display device 10 described in the first embodiment, redundant descriptions thereof are omitted.

### [Fourth embodiment]

Next, a display device according to a fourth embodiment of the present disclosure will be described.

### <Configuration of display device according to fourth embodiment>

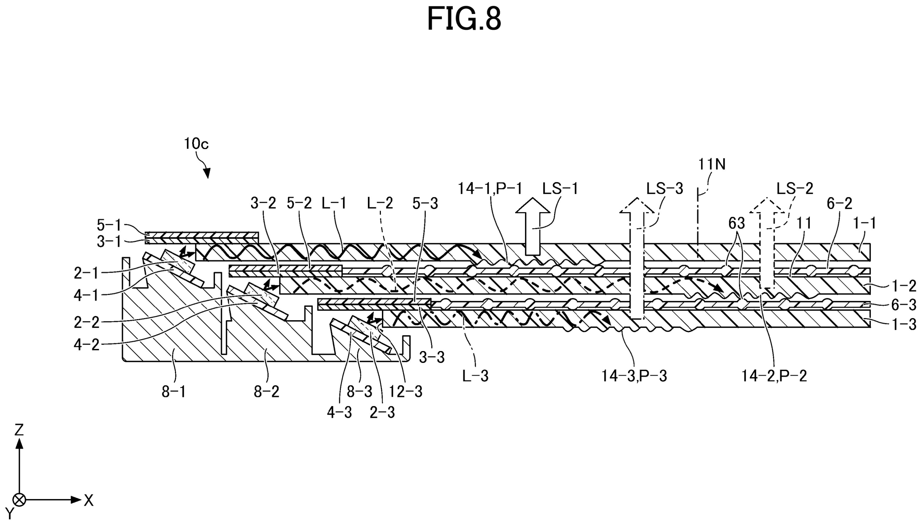

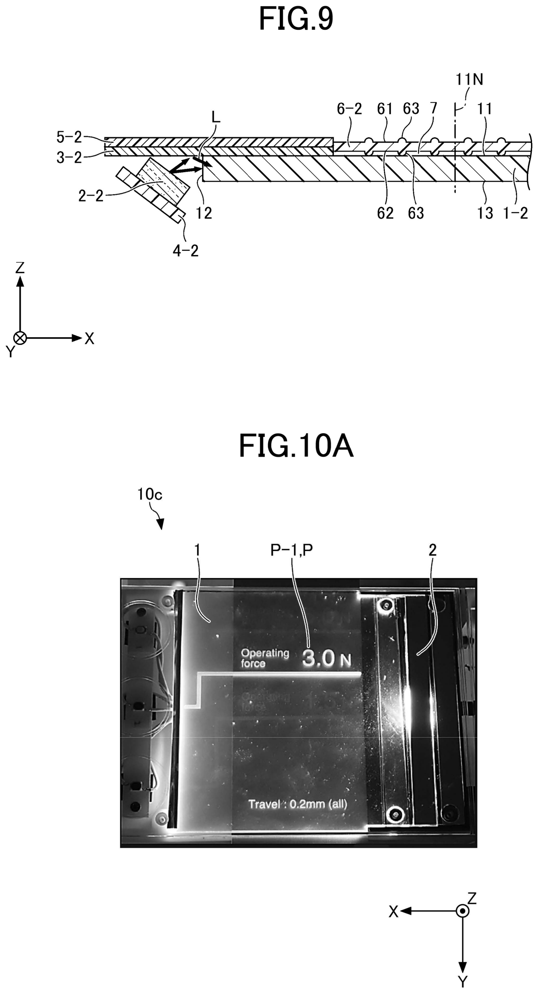

The configuration of a display device according to a fourth embodiment will be described with reference to FIGS. 8 and 9. FIG. 8 is a schematic cross-sectional view illustrating the overall configuration of a display device 10c according to the fourth embodiment. FIG. 9 is a schematic cross-sectional view illustrating the periphery of a protrusion forming layer 6-2 of the display device 10c. FIG. 8 is a cross-sectional view illustrating the display device 10c taken along the line II-II in FIG. 1. FIG. 9 is a cross-sectional view illustrating the periphery of the protrusion forming layer 6-2 of the display device 10c as illustrated in FIG. 8.

### (Overall configuration)

As illustrated in FIG. 8, the display device 10c includes a translucent light-guiding substrate 1-1, a translucent light-guiding substrate 1-2, and a translucent light-guiding substrate 1-3 arranged at mutually different positions in the Z-direction. The display device 10c also includes a light source 2-1, a light source 2-2, and a light source 2-3 arranged at mutually different positions in the Z-direction corresponding to the translucent light-guiding substrate 1-1, the translucent light-guiding substrate 1-2, and the translucent light-guiding substrate 1-3, respectively. The display device 10c also includes a reflective layer 3-1, a reflective layer 3-2, and a reflective layer 3-3 arranged at mutually different positions in the Z-direction corresponding to the translucent light-guiding substrate 1-1, the translucent light-guiding substrate 1-2, and the translucent light-guiding substrate 1-3, respectively. In a top view, the display device 10c displays patterns P-1, P-2, and P-3 corresponding to a light diffusion and scattering portion 14-1, a light diffusion and scattering portion 14-2, and a light diffusion and scattering portion 14-3 of a corresponding translucent light-guiding substrate 1-1, the translucent light-guiding substrate 1-2, and the translucent light-guiding substrate 1-3, respectively. The display device 10c according to the fourth embodiment of the present disclosure is mainly different from the display device 10a according to the second embodiment of the present disclosure in the above points.

In the example as illustrated in FIG. 8, the display device 10c includes a light shielding layer 5-1, a light shielding layer 5-2, and a light shielding layer 5-3 correspondingly arranged on the reflective layer 3-1, the reflective layer 3-2, and the reflective layer 3-3, respectively. The display device 10c also includes a holding member 8-1, a holding member 8-2, and a holding member 8-3 for holding the light source 2-1, the light source 2-2, and the light source 2-3, respectively. Furthermore, the display device 10c includes the protrusion forming layer 6-2 and a protrusion forming layer 6-3.

The translucent light-guiding substrate 1-1 includes the light diffusion and scattering portion 14-1. The translucent light-guiding substrate 1-2 includes the light diffusion and scattering portion 14-2. The translucent light-guiding substrate 1-3 includes the light diffusion and scattering portion 14-3.

The holding member 8-1 holds the light source 2-1 via a wiring board 4-1. The holding member 8-2 holds the light source 2-2 via a wiring board 4-2. The holding member 8-3 holds the light source 2-3 via a wiring board 4-3.

The translucent light-guiding substrate 1-1, the translucent light-guiding substrate 1-2, and the translucent light-guiding substrate 1-3 are adjacent in the Z-direction. The protrusion forming layer 6-2 is correspondingly arranged between the translucent light-guiding substrate 1-1 and the translucent light-guiding substrate 1-2. The protrusion forming layer 6-3 is correspondingly arranged between the translucent light-guiding substrate 1-2 and the translucent light-guiding substrate 1-3. A plurality of protrusions 63 are provided side by side in the X-direction and the Y-direction on an upper surface and a lower surface of each of the protrusion forming layer 6-2 and the protrusion forming layer 6-3.

Light L-1 emitted from the light source 2-1 is guided to the +X-side inside the translucent light-guiding substrate 1-1 and is diffused or scattered by the light diffusion and scattering portion 14-1. Diffused and scattered light LS-1 by the light diffusion and scattering portion 14-1 is extracted from the translucent light-guiding substrate 1-1 to the +Z-side. Light L-2 emitted from the light source 2-2 is guided to the +X-side inside the translucent light-guiding substrate 1-2, and is diffused or scattered by the light diffusion and scattering portion 14-2. Diffused and scattered light LS-2 by the light diffusion and scattering portion 14-2 is extracted from the translucent light-guiding substrate 1-2 to the +Z-side. Light L-3 emitted from the light source 2-3 is guided to the +X-side inside the translucent light-guiding substrate 1-3, and is diffused or scattered by the light diffusion and scattering portion 14-3. Diffused and scattered light LS-3 by the light diffusion and scattering portion 14-3 is extracted from the translucent light-guiding substrate 1-3 to the +Z-side.

The display device 10c causes the light source 2-1 to emit light and the light source 2-2 and the light source 2-3 to not emit light. In this way, the display device 10c can display the pattern P-1 corresponding to the light diffusion and scattering portion 14-1 and hide the patterns P-2 and P-3 corresponding to the light diffusion and scattering portion 14-2 and the light diffusion and scattering portion 14-3. In addition, the display device 10c causes the light source 2-2 to emit light and the light source 2-1 and the light source 2-3 to not emit light. In this way, the display device 10c can display the pattern P-2 corresponding to the light diffusion and scattering portion 14-2 and hide the patterns P-1 and P-3 corresponding to the light diffusion and scattering portion 14-1 and the light diffusion and scattering portion 14-3. Furthermore, the display device 10c causes the light source 2-3 to emit light and the light source 2-1 and light source 2-2 to not emit light. In this way, the display device 10c can display the pattern P-3 corresponding to the light diffusion and scattering portion 14-3 and hide the patterns P-1 and P-2 corresponding to the light diffusion and scattering portion 14-1 and the light diffusion and scattering portion 14-2.

The display device 10c can select the pattern to be displayed among the patterns P-1, P-2, and P-3 by selecting the light source from among the light source 2-1, the light source 2-2, and the light source 2-3. By making the contents or positions of the patterns P-1, P-2, and P-3 mutually different from each other, the display device 10c can select and display patterns with different contents or display patterns at mutually different positions. The display positions of at least two of the patterns P-1, P-2, and P-3 in the top view may overlap at least partially. The contents of at least two of the patterns P-1, P-2, and P-3 may be the same.

In the example as illustrated in FIG. 8, the light source 2-1, the light source 2-2, and the light source 2-3 do not overlap with each other in the top view. The translucent light-guiding substrate 1-1, the translucent light-guiding substrate 1-2, and the translucent light-guiding substrate 1-3 overlap with each other in a region on the +X-side of an end surface 12-3 of the translucent light-guiding substrate 1-3 in the top view. In the top view, the reflective layer 3-1 and the reflective layer 3-2 partially overlap with each other, and the reflective layer 3-2 and the reflective layer 3-3 partially overlap with each other. The reflective layer 3-1 and the reflective layer 3-3 do not overlap with each other in the top view.

Since the light source 2-1, the light source 2-2, and the light source 2-3 do not overlap with each other in the top view, parts of the light source 2-1 and the light source 2-2 can overlap with each other, and parts of the light source 2-2 and the light source 2-3 can overlap with each other in the Z-direction. Thus, the length of the display device 10c in the Z-direction is shortened. In other words, the display device 10c is thinned. Note that "mutually different positions in the Z-direction" includes a state in which parts of the objects overlap with each other in the Z-direction. For example, "mutually different positions in the Z-direction" includes a state in which parts of the light sources 2-1 and 2-2 overlap with each other, and parts of the light sources 2-2 and 2-3 overlap with each other.

In the display device 10c, for example, the respective thicknesses of the translucent light-guiding substrate 1-1, the translucent light-guiding substrate 1-2, and the translucent light-guiding substrate 1-3 can be made 0.30 mm. When three translucent light-guiding substrates 1 are used, the entire length of the translucent light-guiding substrate 1 in the Z-direction can be made 0.90 mm. The thicknesses of the protrusion forming layers 6-2 and 6-3 can be made 0.15 mm. When four protrusion forming layers are used, the entire length of the protrusion forming layers in the Z-direction can be made 0.60 mm. Furthermore, by overlapping parts of the light source 2-1 and the light source 2-2 and overlapping parts of the light source 2-2 and the light source 2-3 in the Z-direction, the entire length of the light source in the Z-direction can be made 1.5 mm. As a result, the length of the display device 10c in the Z-direction can be reduced to about 3 mm.

When the distance from the translucent light-guiding substrate 1-1 to the translucent light-guiding substrate 1-3 in the Z-direction is long, the difference between the display positions of the pattern P-1, the pattern P-2, and the pattern P-3 in the Z-direction becomes large, and an observer of the patterns may feel uncomfortable. In the display device 10c, the distance from the translucent light-guiding substrate 1-1 to the translucent light-guiding substrate 1-3 can be reduced by making the display device 10c thinner. Thus, the difference between the display positions of the pattern P-1, the pattern P-2, and the pattern P-3 in the Z-direction can be reduced, and an uncomfortable feeling of an observer observing the patterns can be reduced.

In the display device 10c, since the translucent light-guiding substrate 1-1, the translucent light-guiding substrate 1-2, and the translucent light-guiding substrate 1-3 overlap with each other in the top view, the area of the display device 10c can be reduced in the top view, and the display device 10c can be miniaturized. In addition, since parts of the reflective layer 3-1, the reflective layer 3-2, and the reflective layer 3-3 overlap with each other in the top view, the area of the display device 10c can be reduced in the top view, and the display device 10c can be miniaturized.

The display device 10c can display the pattern P corresponding to the color of the light emitted from the light sources by making the colors of the light emitted from at least two or more of the light source 2-1, the light source 2-2, and the light source 2-3 different from each other. In the example as illustrated in FIG. 8, the light source 2-1, the light source 2-2, and the light source 2-3 emit light of different colors. Specifically, the light source 2-1 emits white light. The light source 2-2 emits green light. The light source 2-3 emits yellow light. The pattern P-1 is a white pattern corresponding to the white light emitted by the light source 2-1. The pattern P-2 is a green pattern corresponding to the green light emitted by the light source 2-2. The pattern P-3 is a yellow pattern corresponding to the yellow light emitted by the light source 2-3. As described above, the display device 10c can display patterns of different colors by selecting a light source to emit light from among the light source 2-1, the light source 2-2, and the light source 2-3.

"The colors of the lights are different" means that the colors of the lights are different to such an extent that an observer can recognize the differences. Therefore, even when the peak wavelengths of the two lights of interest are different, when the peak wavelengths of the two lights are similar and the observer can recognize that they are the same, it can be said that the colors of the lights are the same, but not that the colors of the lights are different. Note that the colors of at least two of the patterns P-1, P-2, and P-3 may be the same.

### (Light shielding layer 5-1, light shielding layer 5-2, and light shielding layer 5-3)

Since the light shielding layer 5-1, the light shielding layer 5-2, and the light shielding layer 5-3 can have the same structure, the light shielding layer 5-2 will be described as representative.

The light shielding layer 5-2 is a layer for shielding light emitted from the light source 2-2 and transmitted through the reflective layer 3-2 without being reflected by the reflective layer 3-2. By having the light shielding layer 5-2, the display device 10c can reduce the incidence of leakage light transmitted through the reflective layer 3-2 without being reflected by the reflective layer 3-2 into the translucent light-guiding substrate 1-1 or the translucent light-guiding substrate 1-3. Thus, in the display device 10c, it is possible to reduce patterns that become noise caused by leakage light.

The light shielding layer 5-2 has light absorbing property with respect to the light emitted from the light source 2-2. The light absorbing property means that the reflectance of the light emitted from the light source 2-2 is less than 1%. The light shielding layer 5-2 is preferably dark, and more preferably black. For the light shielding layer 5-2, a resin substrate having a surface coated in black or the like may be used. Alternatively, a metal substrate having a surface coated with black may be used for the light shielding layer 5-2. The light shielding layer 5-2 may include a light absorbing material such as carbon black. Furthermore, the light shielding layer 5-2 is not limited to a light absorbing material, but may be a light reflecting material. The light shielding layer 5-1 may have a light absorbing property for the light emitted from the light source 2-1. The light shielding layer 5-3 may have a light absorbing property for the light emitted from the light source 2-3.

(Protrusion forming layer 6-2 and protrusion forming layer 6-3) Since the protrusion forming layer 6-2 and the protrusion forming layer 6-3 can have the same structure, the protrusion forming layer 6-2 will be described as representative.

As illustrated in FIG. 9, the protrusion forming layer 6-2 is a layer for forming an air layer 7 between the translucent light-guiding substrates 1 adjacent in the Z-direction among the plurality of translucent light-guiding substrates 1. On an upper surface 61 and a lower surface 62 of the protrusion forming layer 6-2, the plurality of protrusions 63 are arranged in a matrix in the X-direction and the Y-direction, respectively. In the example as illustrated in FIG. 9, the protrusions 63 have a spherical shape. In the Z-direction, the length of the protrusions 63 with respect to the upper surface 61 and the length of the protrusions 63 with respect to the lower surface 62 are 10 µm or more, respectively.

For example, when adjacent translucent light-guiding substrates in the Z-direction contact with each other, there is a case where light guided in the translucent light-guiding substrate leaks from the translucent light-guiding substrate without total reflection in the contacted portion and enters into the adjacent translucent light-guiding substrate in the Z-direction. When the light entering the adjacent translucent light-guiding substrate in the Z-direction is diffused or scattered by the light diffusion and scattering portion of the translucent light-guiding substrate, there is a case where an unintended pattern is displayed on the display device. Furthermore, for example, even in the case where a space is provided between the adjacent translucent light-guiding substrates in the Z-direction, when the display device is bent by arranging the display device on a member having a curved surface, the gap between the adjacent translucent light-guiding substrates in the Z-direction fluctuates. Due to this fluctuation, the translucent light-guiding substrates may contact with each other and an unintended pattern may be displayed on the display device.

Since the display device 10c includes the protrusion forming layer 6-2, the translucent light-guiding substrate 1-1 and the translucent light-guiding substrate 1-2 adjacent in the Z-direction can be brought into contact only at the protrusions 63 of the protrusion forming layer 6-2. As a result, the contact area between the translucent light-guiding substrate 1-1 and the translucent light-guiding substrate 1-2 can be greatly reduced as compared with the case where the protrusion forming layer 6-2 is not provided. The air layer 7 exists in the region where the translucent light-guiding substrate 1-1 and the translucent light-guiding substrate 1-2 are not in contact with each other. Therefore, for example, the light L-1 guided inside the translucent light-guiding substrate 1-2 is totally reflected and does not leak out from the translucent light-guiding substrate 1-2. Since the contact area between the translucent light-guiding substrate 1-1 and the translucent light-guiding substrate 1-2 is reduced, for example, the incidence of the light L-2 guided inside the translucent light-guiding substrate 1-2 on the adjacent translucent light-guiding substrate 1 in the Z-direction can be reduced. As a result, it is possible to reduce the display of an unintended pattern on the display device 10c. In addition, even when the display device 10c is arranged on a member having a curved surface, since there are a plurality of protrusions 63, it is possible to reduce the variation of the interval between the adjacent translucent light-guiding substrates 1 in the Z-direction. As a result, it is possible to reduce the possibility that an unintended pattern is displayed on the display device 10c.

Since each of the protrusions 63 has a spherical shape, only the vicinity of the apexes of the protrusions 63 contact the adjacent translucent light-guiding substrate 1 in the Z-direction. Thus, the contact area with the adjacent translucent light-guiding substrate 1 can be suitably reduced. Furthermore, since the shape of the vicinity of the apexes of the protrusions 63 change gently due to the spherical shape, the adjacent translucent light-guiding substrate 1 can be stably arranged on the translucent light-guiding substrate 1. However, the protrusions 63 are not limited to a spherical shape and may have a conical shape, a pyramidal shape, a rectangular parallelepiped shape, or the like.

By setting the length of the protrusions 63 with respect to the upper surface 61 and the length of the protrusions 63 with respect to the lower surface 62 to 10 µm or more, the contact between the adjacent translucent light-guiding substrates 1 in the Z-direction can be suitably reduced. In addition, interference fringes generated by multiple reflections at the adjacent translucent light-guiding substrates 1 in the Z-direction can be readily reduced. However, the length of the protrusions 63 with respect to the upper surface 61 and the length of the protrusions 63 with respect to the lower surface 62 are not limited to 10 µm or more, and may be less than 10 µm. The length of the protrusions 63 with respect to the upper surface 61 and the length of the protrusions 63 with respect to the lower surface 62 may be different.

The thickness of the protrusion forming layer 6-2 may be about 0.15 mm. When the outer edge shape of the protrusion 63 is a circle in a top view, the diameter of the protrusion 63 may be about 0.1 mm. The pitch between adjacent protrusions 63 in the X-direction and the Y-direction among the plurality of protrusions 63 in the top view may be about 1 mm. However, the plurality of protrusions 63 are not necessarily aligned and may be aligned with a non-uniform pitch. The plurality of protrusions 63 are not limited to have a matrix shape in the top view, and may be aligned in a triangular lattice shape or a honeycomb lattice shape.

The protrusion forming layer 6-2 has translucency. The translucency of the protrusion forming layer 6-2 is preferably 60% or more in transmittance to visible light, for example. The protrusion forming layer 6-2 may include a resin or the like. From the viewpoint of making the protrusion forming layer 6-2 thin, the protrusion forming layer 6-2 is preferably a resin film. As a method for forming the plurality of protrusions 63 on the protrusion forming layer 6-2, an embossing method, a molding method, an imprint method, or the like can be used.

The protrusion forming layer 6-2 is preferably flexible. The flexibility of the protrusion forming layer 6-2 makes it possible to arrange the display device 10c along the shape of a member having not only a planar shape but also a curved shape or other various shapes.

### (Holding members 8-1, 8-2, and 8-3)

In the example as illustrated in FIG. 8, the holding member 8-1, the holding member 8-2, and the holding member 8-3 hold the light source 2-1, the light source 2-2, and the light source 2-3, respectively, such that their positions in the Z-direction are different from each other. The holding member 8-1, the holding member 8-2, and the holding member 8-3 hold the light source 2-1, the light source 2-2, and the light source 2-3, respectively, such that they do not overlap each other in a top view. The holding member 8-1, the holding member 8-2, and the holding member 8-3 may include a resin, a metal, or the like. The shapes of the holding member 8-1, the holding member 8-2, and the holding member 8-3 may be appropriately changed in accordance with the shapes of the members on which the display device 10c is disposed.

### <Examples of display by display device 10c>

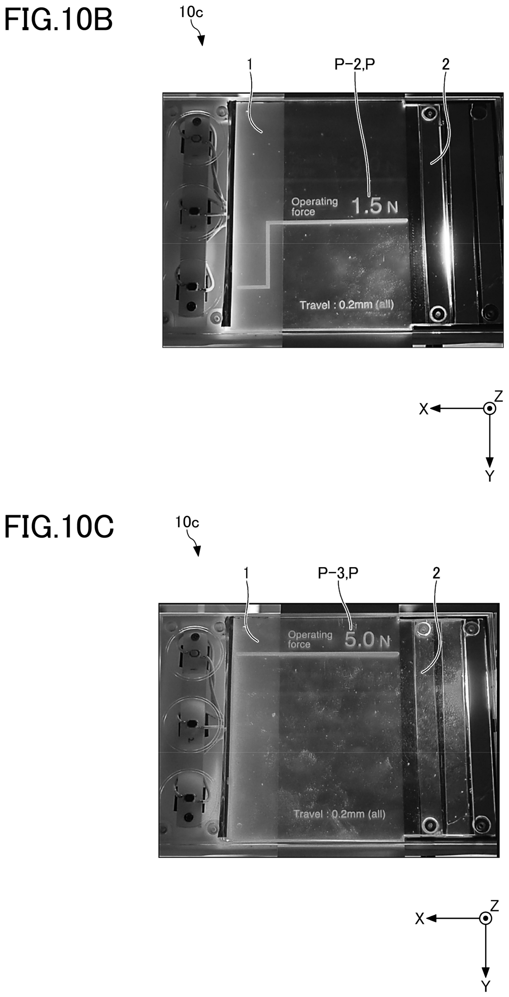

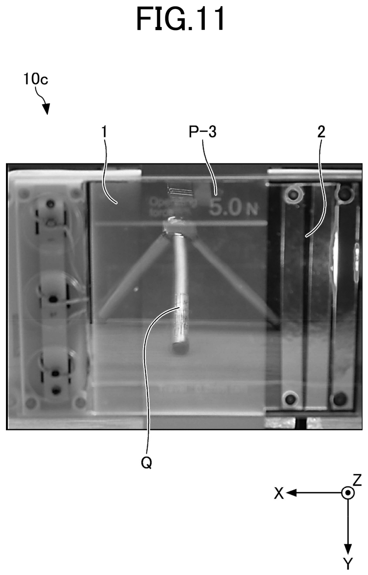

Examples of a display by the display device 10c will be described with reference to FIGS. 10A, 10B, 10C, and 11. FIG. 10A is a view of a first example of a pattern P displayed by the display device 10c. FIG. 10B is a view of a second example of the pattern P displayed by the display device 10c. FIG. 10C is a view of a third example of the pattern P displayed by the display device 10c. FIG. 11 is a view of an example of a state in which an object Q behind the display device 10c is visible through the display device 10c.

The pattern P-1 shown in FIG. 10A is a pattern displayed when the light source 2-1 of the light source 2 emits light and neither the light source 2-2 nor the light source 2-3 emits light. The pattern P-2 shown in FIG. 10B is a pattern displayed when the light source 2-2 of the light source 2 emits light and neither the light source 2-1 nor the light source 2-3 emits light. The pattern P-3 shown in FIG. 10C is a pattern displayed when the light source 2-3 of the light source 2 emits light and neither the light source 2-1 nor the light source 2-2 emits light. In FIGS. 10A, 10B, and 10C, in order to show that the pattern P-1, the pattern P-2, and the pattern P-3 are examples of the pattern P, the respective symbols of the pattern P-1, the pattern P-2, and the pattern P-3 are indicated together with the symbol of the pattern P.

The pattern P-1 shown in FIG. 10A includes numerals and a character "3.0 N". The pattern P-1 is a white pattern. The pattern P-2 shown in FIG. 10B includes numerals and a character "1.5 N" and is displayed on the +Y side of the pattern P-1 in a top view. The pattern P-2 is a green pattern. The pattern P-3 shown in FIG. 10C includes numerals and a character "5.0 N" and is displayed on the -Y-side of the pattern P-1 in a top view. The pattern P-3 is a yellow pattern. As described above, the display device 10c can display patterns of mutually different colors at mutually different positions with mutually different contents in a top view by selecting the light source 2 to emit light from among the light source 2-1, the light source 2-2, and the light source 2-3. The colors of the pattern P-1, the pattern P-2, and the pattern P-3 are not limited to white, green, yellow, or the like, and can be appropriately changed according to the application of the display device 10c.

In the example shown in FIG. 11, when the display device 10c displays the pattern P-3, the object Q positioned behind the display device 10c is visible. As described above, even when the display device 10c includes a plurality of translucent light-guiding substrates 1, the object Q positioned behind the display device 10c is visible through the display device 10c while displaying the pattern P.

Since the effects of the display device 10c other than those described above are the same as those described in the second embodiment, redundant descriptions thereof are omitted.

According to an embodiment of the present disclosure, it is possible to provide a display device which has high light utilization efficiency and can be miniaturized.

Although the preferred embodiments have been described in detail above, the present invention is not limited to the above-described embodiments, and various modifications may be made to the above-described embodiments without departing from the scope of the appended claims.

For example, in the first embodiment of the present disclosure, an example in which the light source 2 faces only the second main surface 13 (see FIG. 2) is shown, and in the second embodiment of the present disclosure, an example in which the light source 2 faces only the second main surface 13 and the end surface 12 (FIG. 6) is shown, but the present disclosure is not limited thereto. For example, in the display device according to the embodiment of the present disclosure, the light source 2 may be arranged to face only the end surface 12. In this case as well, since light loss can be reduced, it is possible to provide the display device 10 with high light utilization efficiency and miniaturization. However, in the case where the light source 2 faces only the end surface 12, a length equal to or greater than the length of the light emitting surface of the light source 2 is required for the end surface 12 in the Z-direction, so it is preferable to use the light source 2 having a short length of the light emitting surface in the Z-direction from the viewpoint of reducing the thickness of the display device in the Z-direction.

In the fourth embodiment of the present disclosure, a plurality of light shielding layers 5 correspondingly arranged on a plurality of reflective layers 3 are illustrated, but the present disclosure is not limited thereto. In the display device according to the embodiment of the present disclosure, one light shielding layer 5 may be arranged on one reflective layer 3. Specifically, one light shielding layer 5 may be arranged on the reflective layer 3 as illustrated in FIG. 1, and one light shielding layer 5 may be arranged on the reflective layer 3 as illustrated in FIG. 6. In these cases, it is also possible to reduce a noise pattern generated by light leaking upward from the reflective layer 3.

Ordinal numbers, quantities, and the like used in the description of the embodiments are all exemplified for the purpose of concretely explaining the technique of the present disclosure, and the present disclosure is not limited to the exemplified numbers. The connection relationship between the components is exemplified for the purpose of concretely explaining the technique of the present disclosure, and the connection relationship for achieving the function of the present disclosure is not limited to the above.

Since the display device of the present disclosure has high light utilization efficiency and can be miniaturized, it can be suitably used for an in-vehicle display device or the like which is arranged on a dashboard, an instrument panel, a door panel, or the like disposed inside a vehicle, and displays the position of an operation button or the position of information such as the traveling speed or temperature inside the vehicle displayed by a liquid crystal panel. Since the display device is miniaturized, the dashboard, the instrument panel, the door panel, or the like in which the display device is arranged can be miniaturized or thinned, and the interior space of the vehicle can be enlarged. However, the display device of the present disclosure can be applied not only to the in-vehicle display device but also to various applications. Furthermore, the display device of the present disclosure can be included in a touch panel in combination with an operation panel.

Embodiments of the present disclosure may include, for example, the following contents.
<1> A display device including:
   a translucent light-guiding substrate including
      a first main surface;
      an end surface intersecting the first main surface; and
      a second main surface located on an opposite side of the first main surface;
   a light source including a light emitting surface and arranged to face at least one of the second main surface or the end surface; and
   a reflective layer arranged on the first main surface in a region overlapping with the light source in a top view, wherein
   the translucent light-guiding substrate includes a light diffusion and scattering portion, and
   a pattern corresponding to the light diffusion and scattering portion is displayed in the top view.
<2> The display device according to <1> above, wherein
   a bottom of the translucent light-guiding substrate is visible in the top view.
<3> The display device according to <1> or <2> above,
   wherein
   the light source is positioned below the first main surface.
<4> The display device according to any one of <1> to <3> above, wherein
   the light source is arranged to face each of the end surface and the reflective layer without overlapping with the translucent light-guiding substrate in the top view, and
   a normal to the light emitting surface is inclined to approach the end surface.
<5> The display device according to any one of <1> to <4> above, including:
   one or more light sources arranged in a direction in which the end surface extends, wherein
   the translucent light-guiding substrate includes one or more cutouts arranged in the direction in which the end surface extends, and the one or more light sources correspondingly overlap with the one or more cutouts in the top view.
<6> The display device according to any one of <1> to <5> above, wherein
   a light shielding layer is disposed on the reflective layer.
<7> The display device according to any one of <1> to <6> above, including:
   a plurality of translucent light-guiding substrates, each being the translucent light-guiding substrate, arranged at mutually different positions of the first main surface in a direction normal to the first main surface;
   a plurality of light sources, each being the light source, arranged at mutually different positions in the direction normal to the first main surface corresponding to the plurality of translucent light-guiding substrates; and
   a plurality of reflective layers, each being the reflective layer, arranged at mutually different positions in the direction normal to the first main surface corresponding to the plurality of translucent light-guiding substrates, wherein
   the display device displays the pattern corresponding to the light diffusion and scattering portion of a corresponding translucent light-guiding substrate, the corresponding translucent light-guiding substrate being from among the plurality of translucent light-guiding substrates, in the top view.
<8> The display device according to <7> above, wherein
   the plurality of light sources do not overlap with each other in the top view.
<9> The display device according to <7> or <8> above, wherein
   among the plurality of light sources, colors of light emitted from at least two or more of the light sources are different from each other and the pattern corresponding to a color from among the colors of the light emitted from the light sources is displayed.
<10> The display device according to any one of <7> to <9> above, including: one or more protrusion forming layers correspondingly arranged between translucent light-guiding substrates adjacent in the direction normal to the first main surface and in which a plurality of protrusions are provided side by side on an upper surface and a lower surface of each of the protrusion forming layers, the translucent light-guiding substrates adjacent in the direction normal to the first main surface being from among the plurality of translucent light-guiding substrates.
<11> The display device according to <10> above, wherein each of the protrusions has a spherical shape.
<12> The display device according to <10> or <11> above,
   wherein
   in the direction normal to the first main surface, a length of the protrusions with respect to the upper surface of the protrusion forming layer and a length of the protrusions with respect to the lower surface of the protrusion forming layer are 10 µm or more, respectively.
<13> The display device according to any one of <7> to <12> above, including:
   a light-shielding layer disposed on the reflective layer.

## Claims

1. A display device, comprising:
a translucent light-guiding substrate including
a first main surface;
an end surface intersecting the first main surface; and
a second main surface located on an opposite side of the first main surface;
a light source including a light emitting surface and arranged to face at least one of the second main surface or the end surface; and
a reflective layer arranged on the first main surface in a region overlapping with the light source in a top view, wherein
the translucent light-guiding substrate includes a light diffusion and scattering portion, and
a pattern corresponding to the light diffusion and scattering portion is displayed in the top view.

2. The display device according to claim 1, wherein
a bottom of the translucent light-guiding substrate is visible in the top view.

3. The display device according to claim 1 or 2, wherein
the light source is positioned below the first main surface.

4. The display device according to one of claims 1 to 3,
wherein
the light source is arranged to face each of the end surface and the reflective layer without overlapping with the translucent light-guiding substrate in the top view, and
a normal to the light emitting surface is inclined to approach the end surface.

5. The display device according to one of claims 1 to 4, comprising:
one or more light sources arranged in a direction in which the end surface extends, wherein
the translucent light-guiding substrate includes one or more cutouts arranged in the direction in which the end surface extends, and
the one or more light sources correspondingly overlap with the one or more cutouts in the top view.

6. The display device according to one of claims 1 to 5,
wherein
a light shielding layer is disposed on the reflective layer.

7. The display device according to one of claims 1 to 6, comprising:
a plurality of translucent light-guiding substrates, each being the translucent light-guiding substrate, arranged at mutually different positions of the first main surface in a direction normal to the first main surface;
a plurality of light sources, each being the light source, arranged at mutually different positions in the direction normal to the first main surface corresponding to the plurality of translucent light-guiding substrates; and
a plurality of reflective layers, each being the reflective layer, arranged at mutually different positions in the direction normal to the first main surface corresponding to the plurality of translucent light-guiding substrates, wherein
the display device displays the pattern corresponding to the light diffusion and scattering portion of a corresponding translucent light-guiding substrate, the corresponding translucent light-guiding substrate being from among the plurality of translucent light-guiding substrates, in the top view.

8. The display device according to claim 7, wherein
the plurality of light sources do not overlap with each other in the top view.

9. The display device according to claim 7 or 8, wherein
among the plurality of light sources, colors of light emitted from at least two or more of the light sources are different from each other and the pattern corresponding to a color from among the colors of the light emitted from the light sources is displayed.

10. The display device according to one of claims 7 to 9, comprising:
one or more protrusion forming layers correspondingly arranged between translucent light-guiding substrates adjacent in the direction normal to the first main surface and in which a plurality of protrusions are provided side by side on an upper surface and a lower surface of each of the protrusion forming layers, the translucent light-guiding substrates adjacent in the direction normal to the first main surface being from among the plurality of translucent light-guiding substrates.

11. The display device according to claim 10, wherein each of the protrusions has a spherical shape.

12. The display device according to claim 10 or 11, wherein
in the direction normal to the first main surface, a length of the protrusions with respect to the upper surface of the protrusion forming layer and a length of the protrusions with respect to the lower surface of the protrusion forming layer are 10 µm or more, respectively.

13. The display device according to one of claims 7 to 12, comprising:
a plurality of light-shielding layers, each of the light-shielding layers being disposed on a corresponding reflective layer of the plurality of reflective layers.
